Europäisches Patentamt

European Patent Office

Office européen des brevets

(11) Numéro de publication : **0 371 529 B1**

(12) **FASCICULE DE BREVET EUROPEEN**

(45) Date de publication du fascicule du brevet :
09.09.92 Bulletin 92/37

(51) Int. Cl.⁵ : **B64B 1/58**

(21) Numéro de dépôt : **89202794.7**

(22) Date de dépôt : **07.11.89**

(54) **Procédé de stabilisation en altitude d'un ballon stratosphérique et ballon adapté à sa mise en oeuvre.**

(30) Priorité : **30.11.88 FR 8815798**

(43) Date de publication de la demande :
**06.06.90 Bulletin 90/23**

(45) Mention de la délivrance du brevet :
**09.09.92 Bulletin 92/37**

(84) Etats contractants désignés :
**AT BE CH DE ES FR GB GR IT LI LU NL SE**

(56) Documents cités :
**FR-A- 2 418 150
US-A- 3 312 427
US-A- 4 136 222
US-A- 4 262 864
US-A- 4 734 072**

(56) Documents cités :
**MACHINE DESIGN, no. 9, 21 avril 1988, pages 10-11, Cleveland, Ohio, US; "Polymer balloon aims at 60,000-ft altitude record"
EASCON'79 RECORD, Arlington, VA, 25-27 septembre 1978, vol. 3, pages 559-568, IEEE, New York, US; E.C. OKRESS et al.: "Solarthermal aerostat research station"**

(73) Titulaire : **CENTRE NATIONAL D'ETUDES SPATIALES (C.N.E.S.) Etablissement public, scientifique et
technique à caractère industriel et commercial 2, place Maurice-Quentin
F-75039 Paris Cédex 01 (FR)**

(72) Inventeur : **Tockert, Christian
11, boulevard Michelet
F-31000 Toulouse (FR)**

(74) Mandataire : **Barre, Philippe
Cabinet Barre-Gatti-Laforgue 95 rue des Amidonniers
F-31069 Toulouse Cédex (FR)**

Jouve, 18, rue Saint-Denis, 75001 PARIS

## Description

L'invention concerne un procédé pour stabiliser en altitude un ballon stratosphérique à volume variable entre des niveaux supérieurs et inférieurs au cours d'une pluralité de cycles diurnes et nocturnes. Elle vise la stabilisation de ballons stratosphériques de type ouvert, à volume variable, ayant une enveloppe en un matériau transparent apte à présenter, d'une part, un état de plénitude où ladite enveloppe est entièrement gonflée, d'autre part, des états de gonflage réduit où ladite enveloppe se présente sous la forme d'une bulle supérieure prolongée par une traîne inférieure. Par "matériau transparent", on entend selon l'habitude un matériau qui laisse passer le rayonnement solaire et infrarouge avec une absorption très minoritaire par rapport aux flux incidents ; ce matériau peut en particulier être constitué par du polyéthylène ou du polyester, qui sont les matériaux généralement utilisés pour fabriquer les ballons stratosphériques.

On sait que les ballons stratosphériques à volume variable peuvent présenter des volumes très importants (supérieurs à $10^6$ m³) et transporter de lourdes charges jusqu'à des altitudes de l'ordre de 40 à 45 km. Ces ballons stratosphériques se caractérisent notamment en ce qu'ils fonctionnent avec un gaz plus léger que l'air dont ils tirent leur force ascensionnelle et en ce que leur volume à l'état de plénitude est très supérieur (d'un facteur très supérieur à 10) à leur volume à l'état de bulle (état de gonflage réduit) : ce type de ballon peut par exemple être illustré par le brevet US 3.312.427. Ces ballons stratosphériques se différencient totalement des montgolfières qui sont des ballons à volume constant, utilisant le gaz de l'atmosphère dans laquelle ils sont plongés et tirant leur force ascensionnelle, soit d'un brûleur, soit du rayonnement ambiant (solaire ou infrarouge). Les montgolfières solaires ou infrarouges sont réalisées de façon à capter en permanence le maximum d'énergie solaire ou infrarouge et, à cet effet, sont munies sur au moins la moitié de leur surface d'un dispositif de piégeage du rayonnement solaire ou infrarouge ; les ballons montgolfières peuvent par exemple être illustrés par les brevets FR 2.418.150 ou US 4.262.864.

Le problème essentiel que posent les ballons stratosphériques à volume variable visés par l'invention réside dans leur très courte durée de vie, de l'ordre de 24 heures qui peut être étendue à quelques jours à condition d'emporter d'importantes quantités de lest. En effet, en période diurne, lorsqu'un ballon stratosphérique parvient à l'état de plénitude, une partie des gaz est expulsée jusqu'à ce que la force ascensionnelle s'annule, le ballon se stabilisant alors à son plafond de vol ; de nuit, les gaz du ballon subissent un refroidissement important qui entraîne une diminution considérable du volume de celui-ci et une mise en descente irréversible ; seul un largage de lest permet alors une stabilisation (de l'ordre de 10 % du poids de l'ensemble) ; toutefois, la force ascensionnelle qui est ainsi rajoutée se retrouve le jour suivant et se traduit par une nouvelle expulsion de gaz au plafond, de sorte que l'opération de largage de lest est à renouveler chaque nuit pour éviter la descente irréversible. Les quantités de lest emportées étant limitées, la durée de vie de tels ballons ne peut généralement pas dépasser 4 à 5 jours. Cette limitation de durée de vie est un défaut grave de ce type de ballon, cependant que l'obligation d'emporter du lest en quantité importante est très pénalisante puisqu'elle oblige, pour une charge utile donnée, à augmenter le volume du ballon et la masse de gaz aérostatique et, en conséquence, conduit à un accroissement du coût du vol.

La présente invention se propose de pallier les défauts sus-évoqués des ballons stratosphériques de type ouvert, à volume variable.

L'objectif essentiel de l'invention est d'éviter, par un moyen autre qu'un largage de lest, une descente irréversible du ballon en période nocturne, de façon à assurer une stabilisation du ballon entre des niveaux supérieurs (périodes diurnes) et des niveaux inférieurs (périodes nocturnes) pendant une pluralité de cycles diurnes et nocturnes.

A cet effet, le procédé de stabilisation conforme à l'invention consiste à équiper la partie supérieure du ballon stratosphérique d'une cape, dite de piégeage thermique, isolante sur le plan thermique et ayant des propriétés réfléchissantes du côté orienté vers l'extérieur ainsi que du côté orienté vers l'intérieur du ballon ; cette cape de piégeage thermique est dimensionnée de sorte que sa surface soit :

. supérieure à environ 1 % de la surface totale du ballon à l'état de plénitude de façon à couvrir une fraction significative de la bulle dans un état de gonflage réduit et à limiter dans cet état la perte énergétique par réémission vers l'extérieur,

. inférieure à environ 15 % de la surface totale du ballon à l'état de plénitude de façon, d'une part, à modifier faiblement le bilan thermique du ballon dans cet état, d'autre part, à laisser découverte la partie inférieure de la bulle dans un état de gonflage réduit.

Le ballon ainsi équipé est lancé de façon classique en introduisant dans son enveloppe une quantité appropriée de gaz plus léger que l'air (généralement de l'hydrogène ou de l'hélium) et en assurant son décollage par tout procédé connu (procédé en traîne tendue, procédé utilisant un ou des ballons auxiliaires...).

L'ascension d'un tel ballon s'effectue de façon traditionnelle sous l'effet de la force ascensionnelle libre isotherme qui lui est communiquée au départ. Lorsque le ballon atteint son état de plénitude, la cape de piégeage thermique n'a aucune influence sensible sur le bilan thermique en raison de sa surface réduite par rapport à la surface totale du ballon dans cet état. L'altitude du plafond est donc sensiblement identique à celle d'un ballon identique dépourvu de cape. La nuit, le ballon se met en descente sous l'effet du refroidissement de son gaz aérostatique et son volume diminue. La cape de piégeage thermique occupe alors une surface relative de plus en plus grande. A titre d'exemple, on sait que la variation de volume d'un ballon stratosphérique ouvert entre le niveau 16 km et le niveau 40 km est dans un rapport 66, cependant que la variation des surfaces mouillées par le gaz aérostatique (rapport de la surface du ballon à l'état de plénitude à la surface de la bulle au niveau bas) est dans un rapport 17. Ainsi, au niveau bas, la cape de piégeage thermique possède une surface suffisante pour couvrir une fraction significative de la bulle et pour modifier le bilan thermique du ballon : elle produit un découplage radiatif du ballon vis-à-vis du fond de ciel très froid, cependant qu'elle améliore le couplage avec le demi-plan inférieur (d'où provient le rayonnement infrarouge montant de la terre ou des nuages), de sorte que la température d'équilibre du gaz aérostatique ($T_G$) se trouve notablement supérieure à celle du même ballon dépourvu de cape. Or, les équations régissant l'équilibre du ballon montre que, en l'absence de largage de lest, la stabilisation se produit lorsque le rapport $\dfrac{T_G}{T_a}$ (température du gaz aérostatique sur la température de l'air extérieur) devient en période nocturne égal à sa valeur en période diurne :

$$\left(\frac{T_G}{T_a}\right) nuit \quad = \quad \left(\frac{T_G}{T_a}\right) jour$$

Dans le cas d'un ballon dépourvu de cape, la nuit ce rapport de température demeure très inférieur au rapport de jour en raison de la faible valeur de la température du gaz aérostatique $T_G$. Au contraire, dans le cas de l'invention, la cape de piégeage thermique accroît la température $T_G$ (nuit) sans modifier sensiblement la température $T_G$ (jour) et, comme le montrent les simulations, il existe alors un niveau de stabilisation dans la stratosphère, en l'absence de largage de lest. Bien entendu, l'invention peut, le cas échéant, être combinée avec un largage de lest, en particulier au terme d'un certain nombre de cycles, afin d'atteindre de très longues durées de stabilisation en compensant la lente diffusion du gaz à travers l'enveloppe.

Selon une caractéristique préférentielle de l'invention, la cape de piégeage thermique, outre ses propriétés réfléchissantes, possède des propriétés isolantes sur le plan thermique afin de limiter de nuit les pertes par conduction, ce qui tend à accroître encore la température $T_G$ de nuit. De plus, elle peut être réfléchissante sur son côté extérieur afin de renvoyer le rayonnement en période diurne.

La surface de ladite cape est avantageusement comprise entre 2 % et 5 % de la surface totale du ballon à l'état de plénitude. Ces valeurs améliorent l'accroissement de la température $T_G$ de nuit, car la surface de la cape s'étend alors sur environ la moitié de la surface de la bulle : le découplage avec le fond du ciel est ainsi optimisé, de même que le piégeage du rayonnement infrarouge montant du demi-plan inférieur. En particulier, pour des ballons stratosphériques possédant à l'état de plénitude un volume de l'ordre de $10^5$ à $2.10^6$ m³ (volume habituel de ce type de ballon), on pourra prévoir une surface de cape voisine de 3 % de la surface à l'état de plénitude. (Par surface voisine, on entend une surface ne s'écartant pas de plus de $\pm$ 15% de la valeur indiquée). Le gaz de gonflage peut être de l'hydrogène ou de l'hélium ; il sera préférentiellement de l'hydrogène en raison de son coût réduit, de sa masse molaire plus faible et de son pouvoir de diffusion moins élevé. De plus, selon une autre caractéristique du procédé de l'invention, la charge utile prévue qui est embarquée lors du décollage est avantageusement telle que la masse totale flottante M du ballon satisfasse à la relation suivante :

$$1,9.10^{-3}V \leq M \leq 3,9.10^{-3}V,$$

où M est exprimé en kg et V est le volume du ballon à l'état de plénitude exprimé en m³. Cette masse notablement plus faible que pour les ballons stratosphériques classiques permet d'atteindre une altitude de culmination comprise entre 40 km et 45 km (proche en pratique de 45 km). Dans ces conditions, quelles que soient les situations radiatives auxquelles le ballon se trouve exposé de jour, la température de son gaz $T_G$ demeure inférieure à la température de l'air externe $T_a$ en raison des très faibles conductions et convections à ces altitudes et du gradient positif des températures jusqu'à 45 km d'altitude (stratopause). Les expulsions de gaz à l'altitude de culmination (de jour) sont ainsi limitées, ce qui élève le niveau de stabilisation de nuit et permet un nombre de cycles de stabilisation plus grand.

L'invention s'étend, en tant que produit nouveau, à un ballon stratosphérique adapté à la mise en oeuvre du procédé précédemment défini. Ce ballon du type ouvert à volume variable comprend de façon traditionnelle une enveloppe souple en matière synthétique transparente, en particulier polyéthylène ou polyester, dotée en partie basse de manches d'évacuation de gaz et de moyens d'accrochage d'une charge ; selon l'invention, une cape dite de piégeage thermique est fixée sur la partie supérieure de l'enveloppe, ladite cape isolante sur le plan thermique et ayant des propriétés réfléchissantes vers l'extérieur ainsi que vers l'intérieur de l'enveloppe et présentant une surface sensiblement comprise entre 1 % et 15 % de la surface totale de l'enveloppe et préférentiellement entre 2 % et 5 %.

Ladite cape de piégeage thermique est avantageusement constituée d'un complexe isolant sur le plan thermique, ayant au moins une face réfléchissante, notamment métallisée, tournée vers l'intérieur de l'enveloppe.

D'autres caractéristiques, buts et avantages de l'invention ressortiront de la description qui suit en référence aux dessins annexés qui présentent un mode de réalisation de ballon conforme à l'invention et illustrent le procédé de stabilisation mis en oeuvre ; sur ces dessins :

– la figure 1 est une vue schématique d'un ballon conforme à l'invention dans son état de plénitude,

– les figures 2, 3 et 4 sont des coupes de détail de l'enveloppe montrant la cape qui équipe celle-ci en partie haute et la fixation de ladite cape sur les fuseaux, cependant que la figure 5 est une vue de dessus de la pièce polaire supérieure du ballon,

– la figure 6 est une vue schématique du ballon dans un état de gonflage réduit correspondant à une stabilisation de nuit,

– la figure 7 est un diagramme fournissant en fonction du temps, d'une part, les variations d'altitude du ballon conforme à l'invention (courbe A en traits pleins), les variations de la température du gaz aérostatique (courbe B en traits discontinus), les variations de la température de l'air externe (courbe C en traits mixtes), enfin, à titre comparatif, les variations d'altitude d'un ballon classique de mêmes caractéristiques, subissant les mêmes conditions météorologiques, mais dépourvu de cape de piégeage thermique (courbe D),

– les figures $8P_B$, $8P_1$, $8P_2$, et $8P_H$ sont des schémas donnant la forme du ballon respectivement à un point bas de stabilisation nocturne, à des altitudes intermédiaires et à un point haut de stabilisation diurne,

– la figure 9 est un diagramme explicatif destiné à permettre de mieux comprendre le phénomène de stabilisation du ballon conforme à l'invention.

Le ballon stratosphérique représenté à titre d'exemple aux figures possède une enveloppe 1 formée de façon classique par une pluralité de fuseaux longitudinaux tels que 1a qui sont assemblés entre eux le long de leur bordure (en l'exemple par la technique dite de "peeling"). Des rubans tels que 3 sont fixés en bordure des fuseaux, en vue de reprendre les efforts longitudinaux.

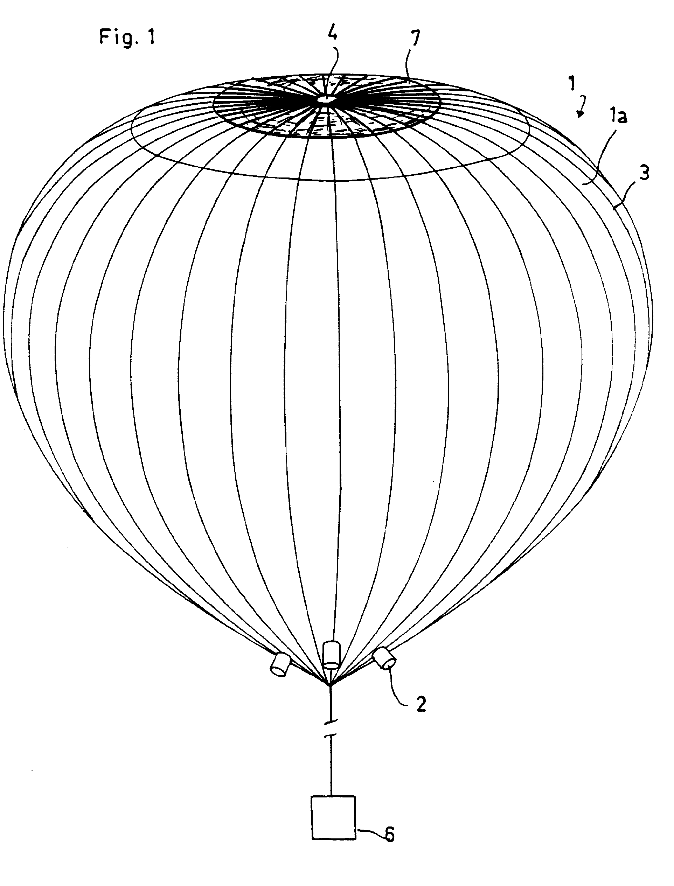

Ce ballon que l'on aperçoit dans son état de plénitude à la figure 1 est doté à sa base de quatre manches d'évacuation telles que 2. En partie supérieure, les rubans de reprise d'effort 3 et les fuseaux 1a sont mécaniquement assemblés sur une pièce polaire métallique 4, avec interposition d'une calotte transparente de renfort 5, dite calotte structurale, qui est fixée à la partie supérieure du ballon en bordure des fuseaux. Un crochet inférieur (non visible) est assujetti sur les rubans de reprise d'effort 3 en partie basse en vue d'attacher une charge utile 6. Ces structures sont classiques pour des ballons stratosphériques, les fuseaux étant par exemple en polyéthylène de 15 μm d'épaisseur, les rubans de renfort en polyéthylène armé de faisceaux en fils de polyester et la calotte structurale 5 en polyéthylène de 15 μm d'épaisseur.

Selon la présente invention, une cape de piégeage thermique 7 est fixée à la partie supérieure du ballon sous la forme d'une calotte entourant le pôle supérieur. Cette cape 7 possède en l'exemple une surface égale à 2,8 % de la surface totale du ballon à l'état de plénitude. Pour un ballon de 400 000 m³ qui est le cas visé dans le présent exemple, la cape de piégeage thermique 7 possède une surface de 750 m² pour une surface totale de ballon de 27 000 m² à l'état de plénitude.

La cape 7 est constituée par un complexe qui est à la fois isolant sur le plan thermique, réfléchissant vers l'intérieur du ballon et réfléchissant vers l'extérieur du ballon.

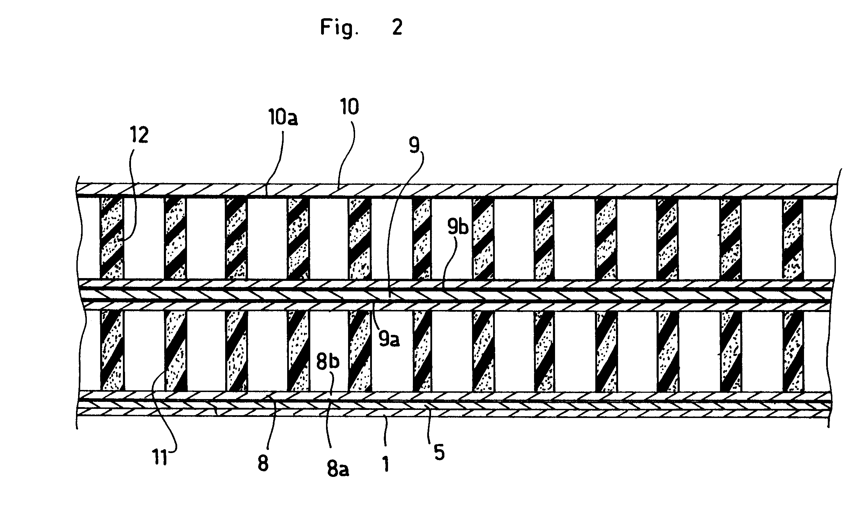

La figure 2 montre un exemple de la structure de ce complexe. La cape 7 se superpose sur une partie de la calotte structurale 5 et est formée par trois feuilles de polyester métallisées 8, 9 et 10 entre lesquelles sont interposées deux couches de mousse 11 et 12.

La feuille 8 située contre la calotte structurale 5 est aluminisée sur ses deux faces 8a et 8b ; son épaisseur peut être de l'ordre de 6 μm.

La couche de mouse 11 collée sur la face externe 8b de cette feuille est une mousse de polyester à cellules ouvertes, perforées d'une multitude de lumières telles que 11a ; cette couche de mousse de très faible densité peut avoir une épaisseur de l'ordre de 5 mm et joue le rôle d'entretoise entre les feuilles interne 8 et intermédiaire 9.

La feuille intermédiaire 9, d'épaisseur de l'ordre de 6 μm, est interposée entre les deux couches de mousse 11 (sans collage afin de préserver la souplesse du complexe) et est aluminisée sur ses deux faces 9a, 9b. Cette feuille améliore le découplage radiatif entre le fond de ciel et l'intérieur du ballon grâce au pouvoir réfléchissant de ses faces, et forme une barrière convective entre les deux couches de mousse 11 et 12.

La couche de mousse 12 est identique à la couche 11 ; elle est posée sans collage contre la feuille intermédiaire 9.

Enfin, la feuille externe 10 d'épaisseur de l'ordre de 12 μm possède une face interne aluminisée 10a qui est collée sur la couche 12 afin de renvoyer le rayonnement en période diurne. La face externe de cette feuille n'est pas aluminisée afin de minimiser l'échauffement diurne du complexe.

La cape 7 dont la structure est décrite ci-dessus, est fixée, d'une part, en bordure des fuseaux 1a, d'autre part, au voisinage de la pièce polaire 4 par son bord supérieur.

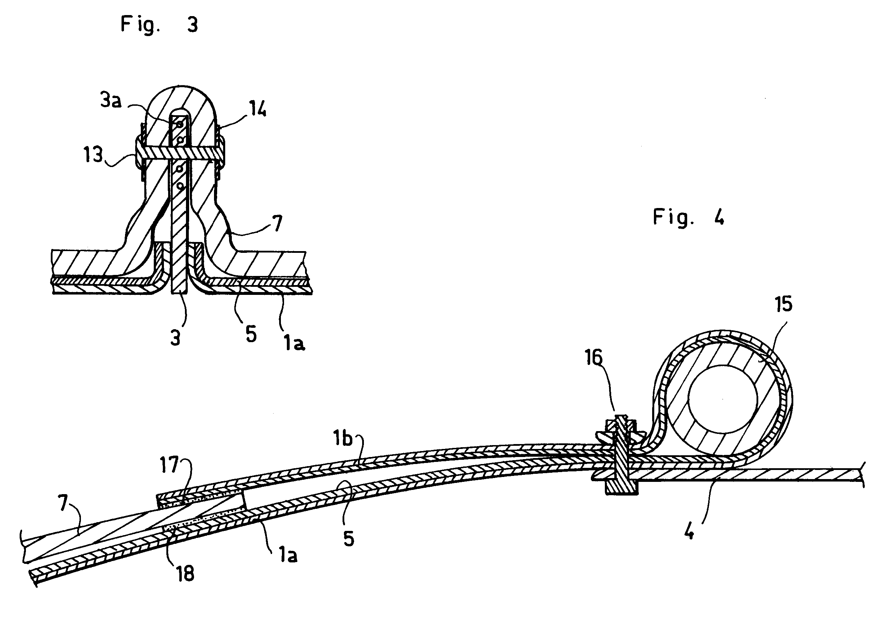

La figure 3 montre en coupe la fixation sur les fuseaux. Les bords de deux fuseaux voisins, tels que 1a, sont soudés sur un ruban de reprise d'effort 3 qui dépasse d'une longueur déterminée de l'ordre de 3 cm ; cette longueur de débordement comporte les faisceaux de renfort 3a précités. Entre deux fuseaux, la cape de piégeage thermique 7 est amenée à chevaucher le ruban 3 et est liée à celui-ci par des rivets synthétiques 13 ; des oeillets de renfort 14 sont collés sur la face externe de la cape au niveau des têtes de chaque rivet.

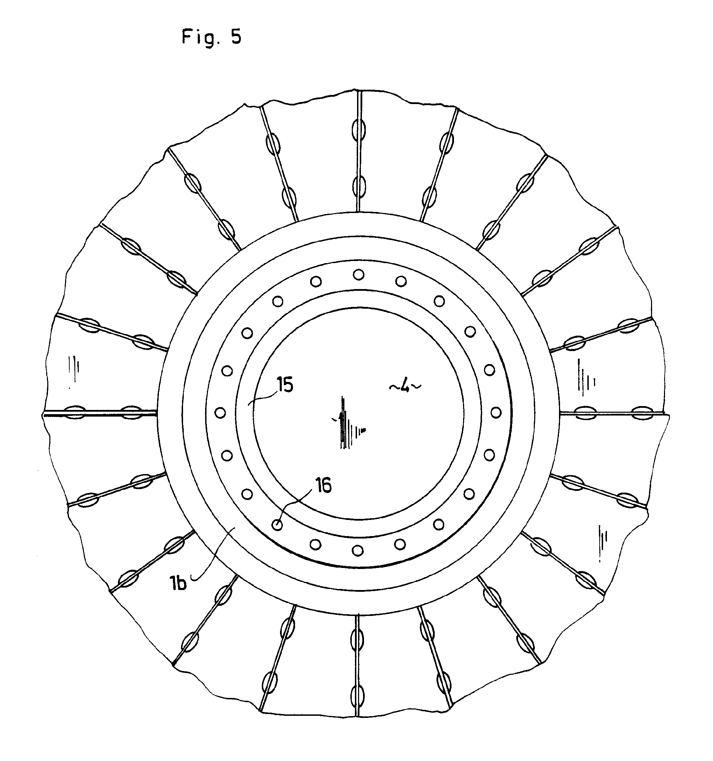

Les figures 4 et 5 montrent respectivement en demi-coupe et en vue de dessus la fixation des fuseaux sur la pièce polaire 4. Celle-ci est constituée par un disque en alliage d'aluminium et les fuseaux sont de façon classique fixés sur ce disque grâce à un pli qu'ils sont amenés à former autour d'un tore 15 en alliage d'aluminium. Une série de boulons 16 permet de fixer sur la pièce polaire 4, le fuseau 1a et le talon externe 1b que forme le pli (une protection est prévue de façon classique sur les écrous de boulons). La cape de piégeage thermique est collée en partie haute entre le fuseau 1a et son talon externe 1b (la calotte structurale 5 qui est solidaire du fuseau est assimilée à ce dernier). Ce collage peut être réalisé au moyen de rubans adhésifs double face 17 et 18.

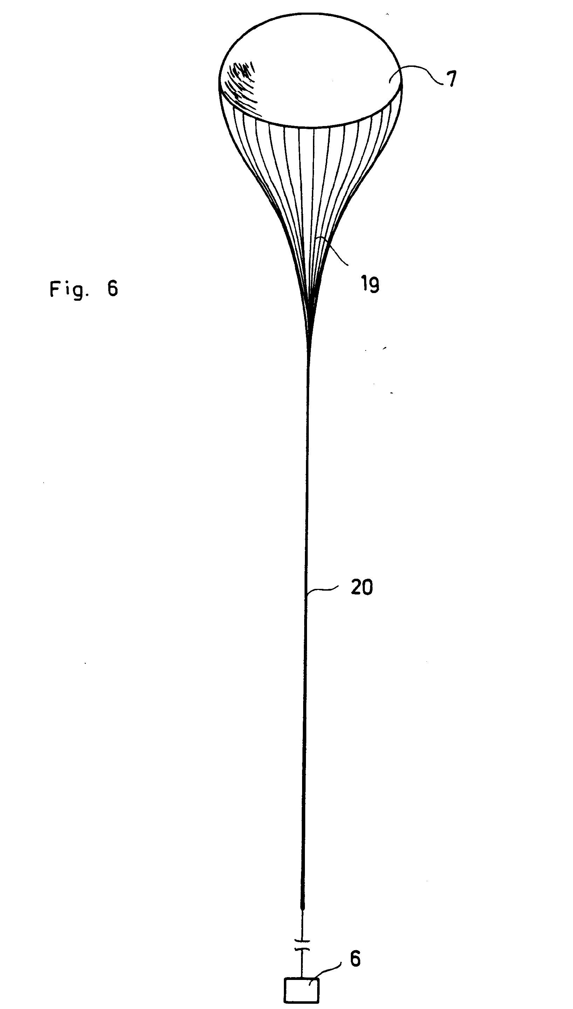

La figure 6 montre le ballon conforme à l'invention dans un état de gonflage réduit. Il est alors formé par une bulle 19 dont le volume est d'environ 5 300 m³ à 16 km d'altitude (pour le ballon précité de 400 000 m³ à l'état de plénitude), la surface de ladite bulle étant de 1 500 m². Au cours de la stabilisation, cet état est en pratique l'état de gonflage le plus réduit (altitude la plus basse de stabilisation). La cape de piégeage thermique occupe alors la moitié de la surface du ballon. La bulle 19 se prolonge par une traîne 20 formée par les fuseaux qui sont repliés les uns contre les autres au-dessous de la bulle.

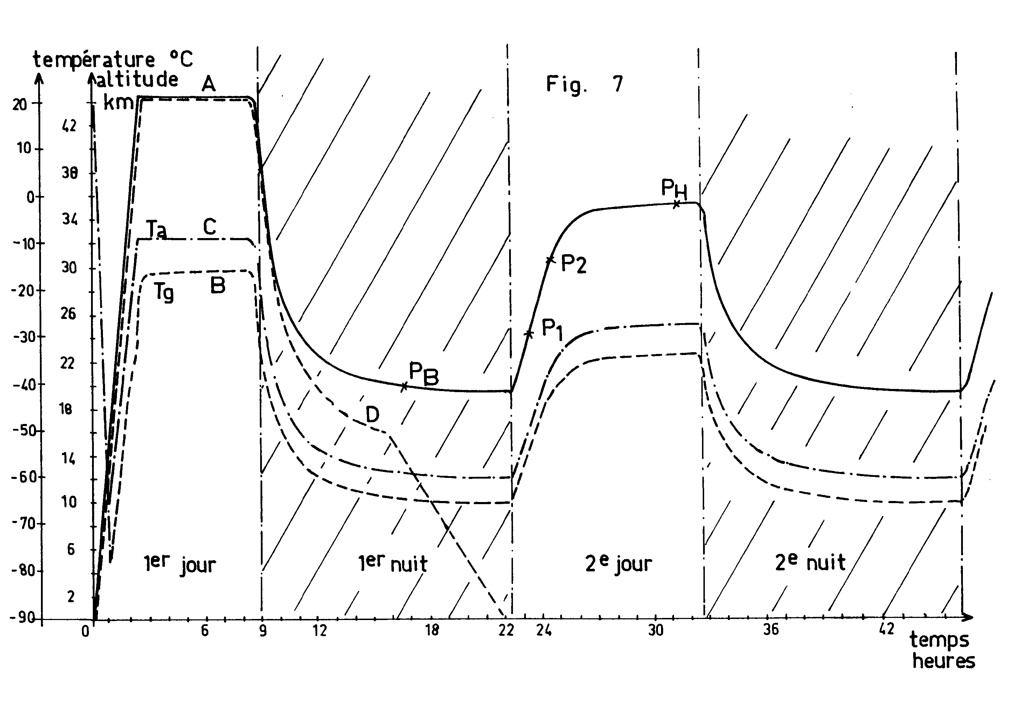

La figure 7 présente les courbes obtenues par une simulation thermique et dynamique avec un ballon tel que décrit plus haut, ayant les paramètres suivants : volume total : 400 000 m³, masse ballon + cape : 650 kg, charge utile: 300 kg, masse d'hydrogène : 77 kg. Ces courbes ont été obtenues en utilisant les tables d'atmosphère 38° Nord (nuit longue), ce qui représente une situation défavorable.

La courbe A donne l'altitude en fonction du temps. La montée après décollage s'effectue de façon proche de celle d'un ballon stratosphérique classique dépourvu de cape. Toutefois, la masse totale flottante étant beaucoup plus faible (1 027 kg au lieu d'environ 1 700 kg), le ballon culmine aux environs de 44 km d'altitude. La situation radiative de la simulation prévoyait pour le premier jour : un albédo de 0,7, un flux infrarouge montant de 240 W/m² (correspondant à la présence de nuages bas), une constante solaire de 1 360 W/m². Il faut noter que cette situation est défavorable car elle procure l'échauffement interne le plus grand du ballon. La courbe B donne la température interne du ballon $T_G$ et la courbe C la température externe de l'air $T_a$. Le rapport $\frac{T_G}{T_a}$ est égal à 0,97 à la plénitude. A 44 km, le ballon présente sa forme de plénitude schématisée à la figure 1.

La simulation prévoyait ensuite une période nocturne très froide (flux infrarouge montant : 110 W/m²), ce qui est une situation très défavorable. Le ballon descend et se stabilise vers 19,5 km (point $P_B$).

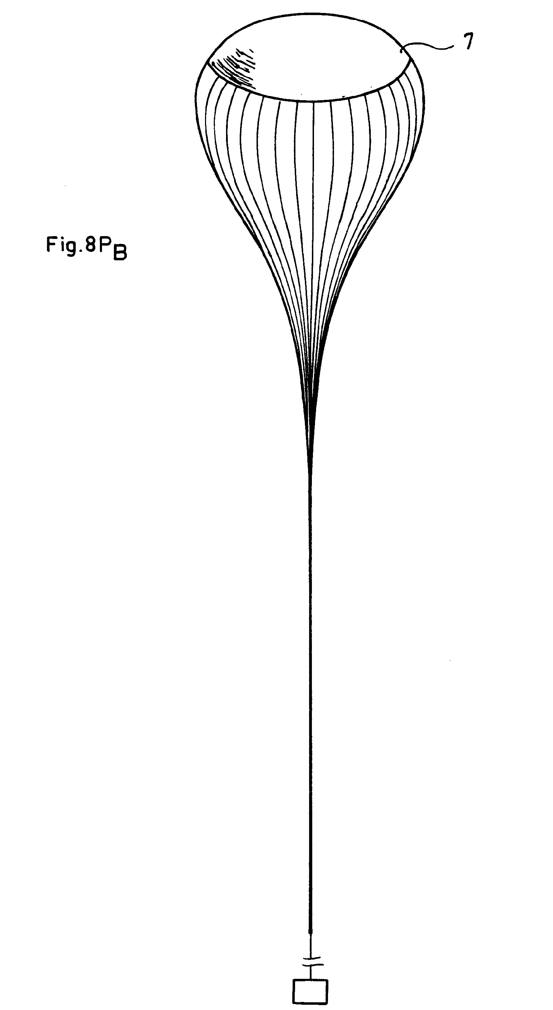

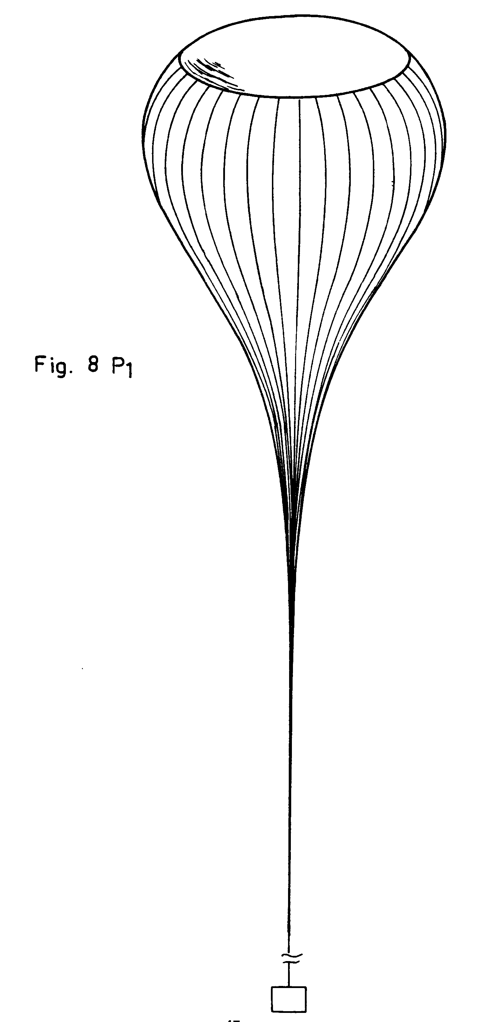

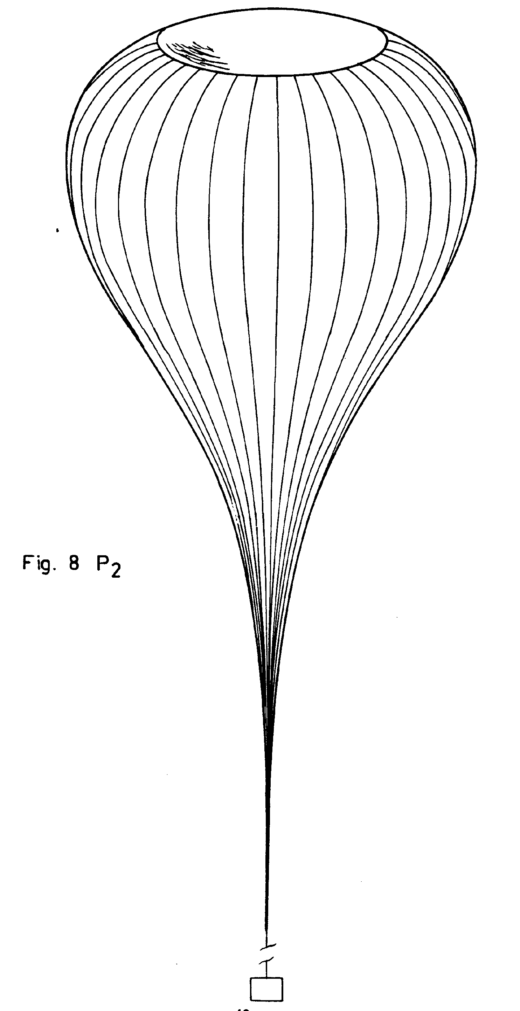

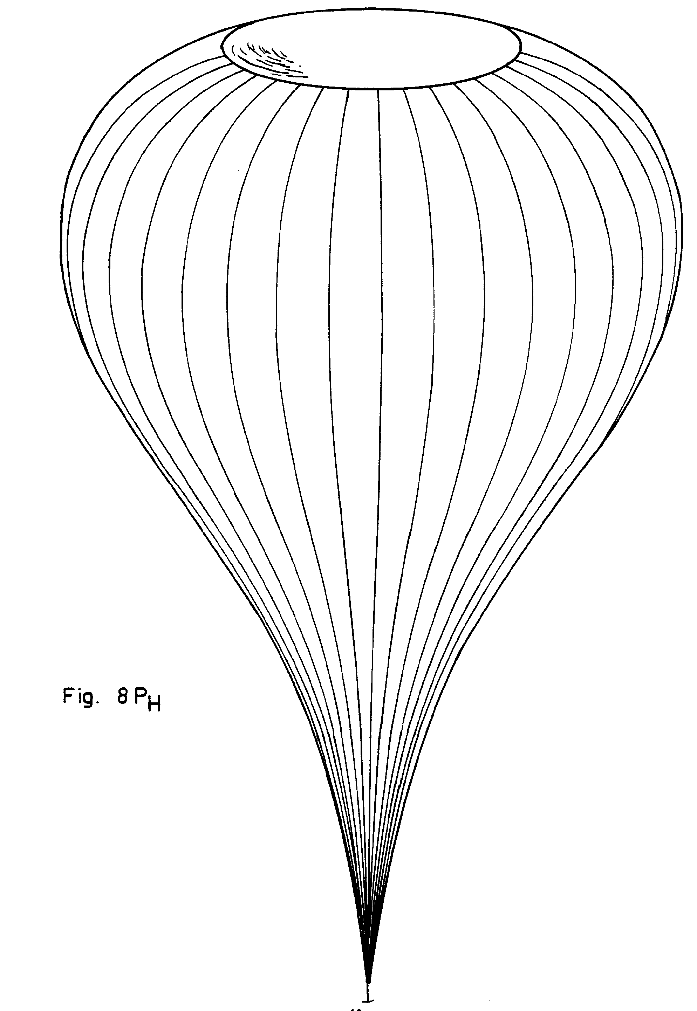

La figure 8$P_B$ schématise la forme du ballon à cette altitude. La cape de piégeage thermique 7 occupe une surface de l'ordre de 36,4 % de la bulle. Dans cet état, la cape 7 piège le flux montant du plan émissif inférieur (nuage en la circonstance) et limite le refroidissement de la bulle au point d'obtenir un rapport $\frac{T_G}{T_a}$ de nuit identique au rapport de jour, ce qui est l'indicatif de la stabilisation comme le démontrent les équations.

La simulation prévoyait ensuite une journée avec un albédo égal à 0,7 et un flux infrarouge montant de 110 W/m² (nuage froid très haut), ce qui représente une situation réaliste. La bulle se réchauffe et le ballon remonte. Les schémas des figures 8$P_1$ et 8$P_2$ montrent sa forme à deux niveaux intermédiaires (24 km et 30 km). La surface relative de la cape 7 décroît et son influence thermique diminue.

Le niveau de culmination diurne est directement fonction des conditions radiatives de la journée considérée. Dans l'exemple donné, le flux de 110 W/m² (au lieu de 240 le premier jour) engendre une culmination vers 35 km. Le ballon n'atteint pas son état de plénitude (pas de perte de gaz) et sa forme est schématisée à la figure 8$P_H$. Cette altitude de culmination n'a aucun effet sur les autres cycles de stabilisation qui se poursuivent, le nombre de cycles de stabilité n'étant limité que par la diffusion à travers l'enveloppe ; celle-ci pourra le cas échéant être compensée par un largage de lest au bout de plusieurs semaines.

A titre de comparaison, la courbe D représente en traits discontinus les variations d'altitude d'un ballon identique au ballon ci-dessus évoqué (même charge, même volume...) mais dépourvu de cape de piégeage thermique. Les simulations montrent que ce ballon classique descend de façon irréversible la première nuit, avec augmentation brusque de la vitesse de chute lors du passage au-dessous de la tropopause.

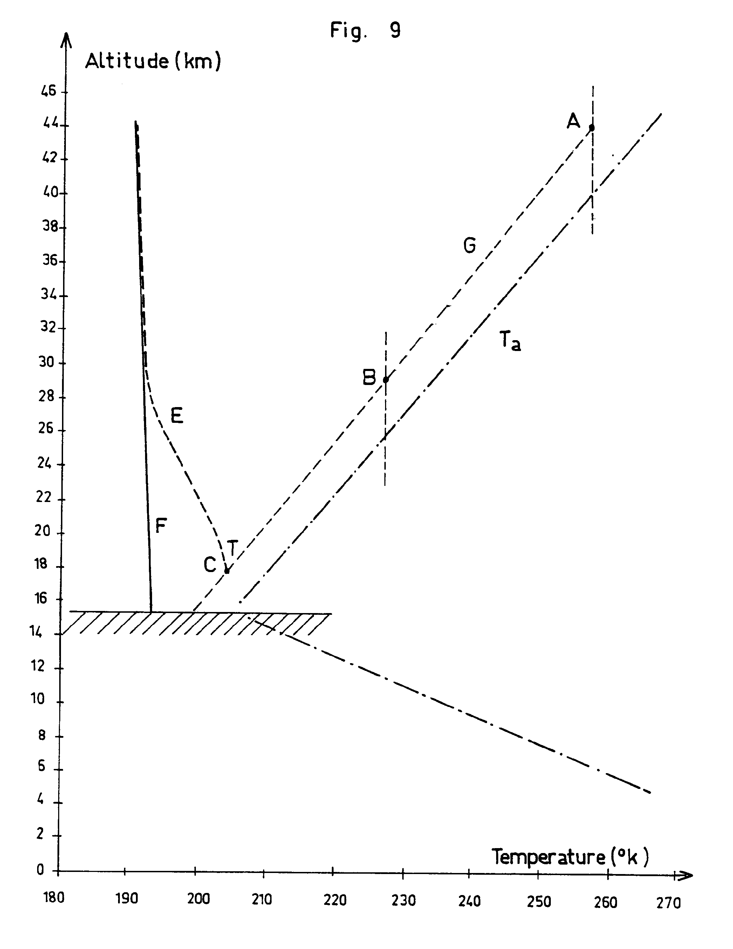

La figure 9 est un diagramme théorique de stabilité altitude/température du ballon conforme à l'invention (courbe E), (les températures étant des températures d'équilibre d'un ballon supposé à chaque instant immobile). On a également représenté sur ce diagramme :

– une courbe F analogue à la courbe E mais pour un ballon classique dépourvu de cape,

– une courbe Ta donnant le profil des températures de l'air extérieur,

– une courbe G qui est la droite théorique de stabilité (définie par le rapport $T_G/T_a$ de jour).

La partie hachurée symbolise un nuage à la limite de la tropopause.

La courbe E concernant le ballon conforme à l'invention s'infléchit vers 28-30 km d'altitude en raison de l'influence de la cape de piégeage thermique par rapport à la courbe F relative au ballon classique dépourvu de cape. Cette inflexion vers les températures plus élevées lui permet de venir couper la courbe théorique de stabilité G en un point de stabilité T correspondant au niveau stable de nuit. Ce point T est situé au-dessus de la tropopause (inversion des températures).

Au contraire, la courbe F du ballon classique n'a pas de point d'intersection avec la courbe G au-dessus de la tropopause, de sorte que ce ballon se met en descente irréversible.

**Revendications**

1/ - Procédé pour stabiliser en altitude un ballon stratosphérique entre des niveaux supérieurs et inférieurs au cours d'une pluralité de cycles diurnes et nocturnes, consistant à utiliser un ballon stratosphérique du type ouvert, à volume variable, ayant une enveloppe (1) en un matériau transparent, apte à présenter, d'une part, un état de plénitude où ladite enveloppe est entièrement gonflée, d'autre part, des états de gonflage réduit où ladite enveloppe se présente sous la forme d'une bulle supérieure prolongée par une traîne inférieure, caractérisé en ce qu'il consiste en outre :

– à équiper la partie supérieure du ballon d'une cape, dite de piégeage thermique (7), isolante sur le plan thermique et ayant des propriétés réfléchissantes du côté orienté vers l'extérieur ainsi que du côté orienté vers l'intérieur du ballon, ladite cape ayant une surface :

. supérieure à environ 1 % de la surface totale du ballon à l'état de plénitude de façon à couvrir une fraction significative de la bulle dans un état de gonflage réduit et à limiter dans cet état la perte énergétique par réémission vers l'extérieur,

. inférieure à environ 15 % de la surface totale du ballon à l'état de plénitude de façon, d'une part, à modifier faiblement le bilan thermique du ballon dans cet état, d'autre part, à laisser découverte la partie inférieure de la bulle dans un état de gonflage réduit,

– à introduire un gaz plus léger que l'air dans le ballon et à assurer son lancement par un procédé classique de lancement de ballon stratosphérique.

2/ - Procédé selon la revendication 1, caractérisé en ce que l'on équipe le ballon d'une cape de piégeage thermique (7) ayant une surface sensiblement comprise entre 2 % et 5 % de la surface totale du ballon à l'état de plénitude.

3/ - Procédé selon la revendication 2, en vue de stabiliser le ballon entre des limites allant de 15 km (cycles nocturnes) à 45 km d'altitude (cycles diurnes), caractérisé en ce que :

– l'on utilise un ballon stratosphérique ayant une enveloppe (1) apte à occuper à l'état de plénitude un volume V compris entre $10^5$ et $2.10^6$ m³,

– l'on équipe ledit ballon d'une cape de piégeage thermique (7) ayant une surface voisine de 3 % de la surface à l'état de plénitude,

– l'on dispose dans le ballon de l'hydrogène ou de l'hélium,

– l'on embarque une charge utile (6) telle que la masse totale flottante M satisfasse à la relation suivante $1,9.10^{-3}V \leq M \leq 3,9.10^{-3}V$, où M est exprimé en kg et le volume V en m³.

4/ - Ballon stratosphérique du type ouvert à volume variable pour la mise en oeuvre du procédé conforme à l'une des revendications 1 à 5, comprenant une enveloppe souple (1) en matière synthétique transparente, en particulier polyéthylène ou polyester, dotée en partie basse de manches d'évacuation de gaz (2) et de moyens d'accrochage d'une charge (6), caractérisé en ce qu'une cape, dite de piégeage thermique (7), est fixée sur la partie supérieure de l'enveloppe, ladite cape étant isolante sur le plan thermique et ayant des propriétés réfléchissantes vers l'extérieur et vers l'intérieur de l'enveloppe et présentant une surface sensiblement comprise entre 1 % et 15 % de la surface totale de l'enveloppe.

5/ - Ballon stratosphérique selon la revendication 4, caractérisé en ce que la cape de piégeage thermique (7) est constituée par un complexe comprenant au moins une feuille à base de polyester (8, 9, 10), métallisée du côté externe et du côté interne, et au moins une couche de mousse à cellules ouvertes à base de polyester (11, 12) percée d'une multitude de lumières.

6/ - Ballon stratosphérique selon l'une des revendications 4 ou 5, dans lequel l'enveloppe est constituée d'un ensemble de fuseaux longitudinaux (1a) assemblés entre eux, de rubans de reprise d'effort (3) fixés en bordure desdits fuseaux et liés en partie basse aux moyens d'accrochage de la charge (6), et d'une calotte transparente de renforts (5) assemblée à la partie supérieure en bordure des fuseaux (1a), caractérisé en ce que la cape de piégeage thermique (7) est fixée sur les rubans de reprise d'effort (3).

7/ - Ballon stratosphérique selon la revendication 6 dans lequel les fuseaux (1a) de l'enveloppe sont fixés au pôle supérieur sur une pièce polaire (4) grâce à un pli formant un talon externe (1b), caractérisé en ce que cape de piégeage thermique (7) est fixée au niveau du pôle supérieur sur les fuseaux (1a) et leur talon externe (1b).

8/ - Ballon stratosphérique selon l'une des revendications 4, 5, 6 ou 7, ayant une enveloppe (1) de volume à l'état de plénitude compris entre $10^5$ et $2.10^6$ m³.

9/ - Ballon stratosphérique selon la revendication 8, caractérisé en ce que la cape de piégeage thermique (7) présente la forme d'une calotte entourant le pôle supérieur du ballon et ayant une surface comprise entre 2 % et 5 % de la surface totale de l'enveloppe.

**Patentansprüche**

1/ - Verfahren zur Höhenstabilisierung eines Stratosphärenballons zwischen oberen und unteren Höhenlagen im Zuge einer Mehrheit von Tages- und Nachtzyklen, bestehend im Gebrauch eines Stratosphärenballons offener Art mit veränderlichem Volumen, wobei der besagte Ballon eine Hülle (1) aus einem transparenten Material aufweist, die so beschaffen ist, daß sie einerseits einen Zustand der Vollheit aufweist, in dem die besagte Hülle vollkommen aufgeblasen ist und andererseits Zustände beschränkter Vollheit, in denen die besagte Hülle die Form einer oberen, durch einen unteren Anhang verlängerten Blase aufweist, und des weiteren dadurch gekennzeichnet,

– daß der obere Teil des Ballons mit einer Kappe, der sogenannten Wärmeabfangkappe (7) versehen wird, wobei die besagte Hülle auf thermischer Ebene isolierend wirkt und nach außen hin sowie nach dem Innern des Ballons reflektierende Eigenschaften aufweist, und zwar hat die besagte Hülle eine Oberfläche,

. die größer ist als ungefähr 1% der Gesamtoberfläche des Ballons im Zustand der Vollheit, so daß sie einen erheblichen Anteil der Blase im Zustand verringerter Vollheit bedeckt und in diesem Zustand den Energieverlust infolge auswärtsgerichteter Abgabe einschränkt,

. die geringer ist als ungefähr 15% der Gesamtoberfläche des Ballons im Zustand der Vollheit, so daß einerseits das Wärmegleichgewicht des Ballons in diesem Zustand leicht abgeändert und andererseits der untere Teil der Blase in einem Zustand verringerter Vollheit unbedeckt gelassen wird,

– daß ein Gas, das leichter ist als Luft in den Ballon eingeführt und dessen Start nach einer herkömmlichen Startmethode für stratosphärische Ballons gewährleistet wird.

2/ - Verfahren nach Anspruch 1, dadurch gekennzeichnet, daß der Ballon mit einer Wärmeabfangkappe (7) versehen wird, wobei die besagte Kappe eine Oberfläche hat, die im wesentlichen zwischen 2% und 5% der Gesamtoberfläche des Ballons im Zustand der Vollheit entspricht.

3/ - Verfahren nach Anspruch 2 mit dem Ziel der Stabilisierung des Ballons zwischen Grenzwerten von 15 km Höhe (Nachtzyklen) bis 45 km Höhe (Tageszyklen), dadurch gekennzeichnet,

– daß von einem Stratosphärenballon mit einer Hülle (1) Gebrauch gemacht wird, die so beschaffen ist, daß sie im Zustand der Vollheit ein Volumen V zwischen $10^5$ und $2 \times 10^6$ m³ aufweist,

– daß der besagte Ballon mit einer Wärmeabfangkappe (7) versehen wird, die eine Oberfläche von etwa 3% der Oberfläche im Zustand der Vollheit aufweist,

– daß in dem Ballon Wasserstoff oder Helium vorgesehen wird,

– daß eine Nutzlast (6) angeschlossen wird, die so beschaffen ist, daß die schwebende Gesamtmasse M der folgenden Beziehung - $1,9 \times 10^{-3} V \leq M \leq 3,9 \times 10^{-3} V$ - entspricht, wobei M in kg und das Volumen V in m³ ausgedrückt wird.

4/ - Stratosphärenballon offener Art mit veränderlichem Volumen zwecks Durchführung des Verfahrens nach einem der Ansprüche 1 bis 5, umfassend eine flexible Hülle (1) aus transparentem Kunststoff, insbesondere Polyäthylen oder Polyester, die im unteren Teil mit Gasevakuierungssockeln (2) und Mitteln zur Anbringung einer Last (6) ausgestattet ist, dadurch gekennzeichnet, daß eine Kappe, die sogenannte Wärmeabfangkappe (7) an dem oberen Teil der Hülle angebracht ist, wobei die besagte Kappe auf thermischer Ebene isolierend wirkt und auswärts sowie nach dem Innern der Hülle reflexive Merkmale besitzt und eine im wesentlichen zwischen 1% und 15% der Gesamtoberfläche der Hülle entsprechende Oberfläche aufweist.

5/ - Stratosphärenballon nach Anspruch 4, dadurch gekennzeichnet, daß die Wärmeabfangkappe (7) in einem Komplex besteht, der mindestens eine außen- und innenseitig metallisierte Folie auf Polyesterbasis (8, 9, 10) sowie mindestens eine auf Polyester basierende Lage aus offenzelligem Schaumstoff (11, 12) mit einer Vielzahl von Poren umfaßt.

6/ - Stratosphärenballon nach einem der Ansprüche 4 oder 5, bei dem die Hülle aus einer Gruppe länglicher Segmente (1a), die miteinander verbunden sind, besteht, sowie aus Spannungsaufnahmebändern (3), die an dem Rand der besagten Segmente angebracht und mit den Mitteln zur Anbringung der Last (6) verbunden sind, und einer transparenten Verstärkungshaube (5), die mit dem oberen Teil am Rand der Segmente (1a) verbunden ist, dadurch gekennzeichnet, daß Wärmeabfangkappe (7) an den Spannungsaufnahmebändern (3) angebracht ist.

7/ - Stratosphärenballon nach Anspruch 6, bei dem Segmente (1a) der Hülle an dem oberen Pol dank einer einen Außenwulst (1b) bildenden Falte an einem Polarstück (4) angebracht sind, dadurch gekennzeichnet, daß Wärmeabfangkappe (7) in Höhe des oberen Pols an Segmenten (1a) und deren Außenwulst (1b) angebracht ist.

8/ - Stratosphärenballon nach einem der Ansprüche 4, 5, 6 oder 7 mit einer Hülle (1), deren Volumen im Zustand der Vollheit zwischen $10^5$ und $2\times10^6$ m³ beträgt.

9/ - Stratosphärenballon nach Anspruch 8, dadurch gekennzeichnet, daß Wärmeabfangkappe (7) die Form einer den oberen Pol des Ballons umfassenden Haube aufweist und eine Oberfläche besitzt, die zwischen 2% und 5% der Gesamtoberfläche der Hülle entspricht.

## Claims

1/ - Altitude stabilisation method for a stratospheric balloon between upper and lower levels in the course of a plurality of diurnal and nocturnal cycles, consisting in the use of a stratospheric balloon of open type and with variable volume, having an envelope (1) made from a transparent material so designed as to present, on the one hand, a state of plenitude in which said envelope is entirely inflated and, on the other hand, states of reduced inflation in which said envelope takes the form of an upper bubble extended by a lower appendage characterised in that it additionally consists

– in providing the upper part of the balloon with a cap, the so-called heat-trapping cap (7), said cap acting as an isolator on the thermal plane and having reflective properties on the side facing towards the outside as well as the side facing towards the inside of the balloon, said cap having a surface

. larger than about 1% of the total surface of the balloon in the state of plenitude so as to cover a significant fraction of the bubble in a state of reduced inflation while limiting in said state energy loss due to re-emission towards the outside,

. smaller than about 15% of the total surface of the balloon in the state of plenitude with a view, on the one hand, to modifying the thermal balance of the balloon in that state slightly while, on the other hand, leaving the lower part of the bubble in a state of reduced inflation uncovered,

– in introducing a gas lighter than air into the balloon and ensuring its launch by a classical method of launching a stratospheric balloon.

2/ - Method according to claim 1, characterised in that the balloon is provided with a heat-trapping cap (7) having a surface substantially comprised between 2% and 5% of the total surface of the balloon in the state of plenitude.

3/ - Method according to claim 2 with a view to stabilising the balloon between limits from 15 km altitude (noctural cycles) to 45 km altitude (diurnal cycles), characterised in that :

– use is made of a stratospheric balloon having an envelope (1) so designed as to occupy in the state of plenitude a volume V comprised between $10^5$ and $2\times10^6$ m³,

– said balloon is provided with a heat-trapping cap (7) having a surface close to 3% of the surface in the state of plenitude,

– hydrogen or helium is provided within the balloon,

– a payload (6) is attached so that the total floating mass M satisfies the following condition $1.9\times10^{-3}V \leq M \leq 3.9\times10^{-3}V$, where M is expressed in kg and volume V in m³.

4/ - Stratospheric balloon of open type and with variable volume for implementing the method according to one of claims 1 to 5, comprising a flexible envelope (1) made from transparent synthetic material, in particular polyethylene or polyester, endowed at its lower part with gas-evacuating sleeves (2) and means (6) for attachment of a load, characterised in that a cap, the so-called heat-trapping cap (7), is secured to the upper part of the envelope, said cap acting as an isolator on the thermal plane and having reflective properties towards the outside and towards the inside of the envelope while presenting a surface substantially comprised between 1% and 15% of the total surface of the envelope.

5/ - Stratospheric balloon according to claim 4, characterised in that heat-trapping cap (7) is constituted by a complex comprising at least one polyester-based foil (8, 9, 10), said foil being metallised on its outside and on its inside, and at least one layer of polyester-based foam with open cells (11, 12) pierced by a multitude of pores.

6/ - Stratospheric balloon according to one of claims 4 or 5, in which the envelope is constituted by an assembly of longitudinal gores (1a) assembled amongst themselves, stress-absorbing tapes (3) attached to the edge of said gores and connected at the lower part with means (6) for attaching the load, as well as a transparent reinforcing hood (5) assembled at the upper part with the edge of gores (1a), characterised in that heat-trapping cap (7) is secured to stress-absorbing tapes (3).

7/ - Stratospheric balloon according to claim 6, in which gores (1a) of the envelope are secured at the upper pole to a polar fitting (4) owing to a fold forming an external heel (1b), characterised in that heat-trapping cap (7) is secured, at the level of the upper pole, to gores (1a) and their external heel (1b).

8/ - Stratospheric balloon according to one of claims 4, 5, 6 or 7, having an envelope (1) with a volume in the state of plenitude comprised between $10^5$ and $2 \times 10^6$ m$^3$.

9/ - Stratospheric balloon according to claim 8, characterised in that heat-trapping cap (7) takes the form of a hood encompassing the upper pole of the balloon while having a surface comprised between 2% and 5% of the total surface of the envelope.

Fig. 1

Fig. 2

Fig. 3

Fig. 4

Fig. 5

Fig. 6

Fig. 7

EP 0 371 529 B1

Fig.8P$_B$

Fig. 8 P₁

17

Fig. 8 $P_2$

18

Fig. 8 P$_H$

19

## Fig. 9